(19) Europäisches Patentamt

European Patent Office

Office européen des brevets

(11) **EP 4 467 039 B1**

(12) **EUROPEAN PATENT SPECIFICATION**

(45) Date of publication and mention of the grant of the patent:
**23.07.2025   Bulletin 2025/30**

(21) Application number: **23210713.6**

(22) Date of filing: **17.11.2023**

(51) International Patent Classification (IPC):
**A47J 31/52** (2006.01)

(52) Cooperative Patent Classification (CPC):
**A47J 31/525; A47J 31/5255**

(54) **BEVERAGE MAKER, AND METHOD AND DEVICE FOR CONTROLLING BEVERAGE BREWING PROCESS**

GETRÄNKEBEREITER SOWIE VERFAHREN UND VORRICHTUNG ZUR STEUERUNG EINES GETRÄNKEBRÜHVORGANGS

MACHINE DE PRÉPARATION DE BOISSON, ET PROCÉDÉ ET DISPOSITIF DE COMMANDE DE PROCESSUS D'INFUSION DE BOISSON

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **23.05.2023   CN 202310591469**

(43) Date of publication of application:
**27.11.2024   Bulletin 2024/48**

(73) Proprietor: **Guangdong Midea Consumer Electrics Manufacturing Co., Ltd. Foshan City, Guangdong 528311 (CN)**

(72) Inventors:
• **YANG, Le**
  **Guangdong, 528311 (CN)**
• **XUAN, Longjian**
  **Guangdong, 528311 (CN)**
• **ZHAO, Jinzhang**
  **Guangdong, 528311 (CN)**
• **ZENG, Jun**
  **Guangdong, 528311 (CN)**
• **QIAO, Weijun**
  **Guangdong, 528311 (CN)**
• **LI, Ming**
  **Guangdong, 528311 (CN)**
• **ZHOU, Qiyou**
  **Guangdong, 528311 (CN)**
• **SITU, Weifeng**
  **Guangdong, 528311 (CN)**
• **WANG, Yuanbin**
  **Guangdong, 528311 (CN)**
• **LI, Tianlong**
  **Guangdong, 528311 (CN)**

(74) Representative: **Whitlock, Holly Elizabeth Ann et al Maucher Jenkins Seventh Floor Offices Artillery House 11-19 Artillery Row London SW1P 1RT (GB)**

(56) References cited:
CN-A- 113 721 671          US-A1- 2020 288 901
US-A1- 2021 059 466

**Description**

**FIELD**

The present disclosure belongs to the field of small household appliances, and particularly relates to a beverage maker, and a method and device for controlling a beverage brewing process.

**BACKGROUND**

In order to satisfy the requirements for heating coffee, brewing coffee, refilling a coffee maker, and washing a coffee maker automatically, a fully-automatic coffee maker has been designed. With the fully-automatic coffee maker, a cup of coffee can be made only with a simple press on a start button, automating the entire process from grinding coffee beans to brewing coffee with hot water.

When the fully-automatic coffee machine starts to brew coffee, as long as the start button is pressed, a flowmeter will start counting while a water pump is started, and it will stop upon reaching the set revolutions. Although the coffee output quantity is set to equal the set coffee quantity, the actual coffee output quantity deviates considerably from the set quantity of coffee. It can be found that current beverage makers (e.g., coffee makers and soybean milk makers) have a problem of inaccuracy in the beverage output quantity.

A method and a device for controlling a beverage brewing process is known from US 2021/059466 A1.

**SUMMARY**

Embodiments of the present disclosure provide a beverage maker, and a method and device for controlling a beverage brewing process, which solve a problem of inaccuracy in a beverage output quantity of the beverage maker at least to some extent.

In a first aspect, an embodiment of the present disclosure provides a method for controlling a beverage brewing process, applied to a beverage maker. A brewing unit of the beverage maker includes a pressurizing member for generating pressure in the brewing unit in the beverage brewing process, and a pipe supplying water to the brewing unit is provided with a flowmeter. The method includes: supplying water to the brewing unit in response to a start signal of current beverage brewing, and obtaining state change information of the flowmeter, where the state change information is configured to indicate a rotational speed change trend of the flowmeter in a current beverage brewing process; triggering metering of a beverage output quantity of the current beverage brewing when it is determined that the brewing unit enters a pressure maintenance stage according to the state change information; and stopping supplying water to the brewing unit when the beverage output quantity metered reaches a target beverage quantity.

In combination with the first aspect, in some embodiments, the method further includes: determining that the brewing unit enters the pressure maintenance stage under the condition that the state change information indicates that a rotational speed of the flowmeter is at an inflection point at which the rotational speed changes from decrease to increase.

In combination with the first aspect, in some embodiments, the obtaining state change information of the flowmeter includes: obtaining a rotational speed indicating parameter of the flowmeter according to a preset period in response to the start signal of current beverage brewing; and comparing a rotational speed indicating parameter obtained at a current time with a rotational speed indicating parameter obtained at a last time each time when a rotational speed indicating parameter of the flowmeter is obtained, and determining the state change information of the flowmeter in the current beverage brewing process.

In combination with the first aspect, in some embodiments, the rotational speed indicating parameter is a time parameter of one revolution of the flowmeter, and the method further includes: determining that a rotational speed of the flowmeter is at an inflection point at which the rotational speed changes from decrease to increase under the condition that the state change information satisfies that a current time parameter of one revolution of the flowmeter is not greater than a difference between a last time parameter of one revolution of the flowmeter and a preset correction constant, and the last time parameter of one revolution of the flowmeter is not less than a sum of the preset correction constant and a before-last time parameter of one revolution of the flowmeter.

In combination with the first aspect, in some embodiments, the obtaining a rotational speed indicating parameter of the flowmeter according to a preset period includes: sampling the rotational speed or a time value of one revolution of the flowmeter according to a preset sampling interval in each period, and correspondingly obtaining n time values or n rotational speed values in a current period; and calculating a mean value of the n time values or the n rotational speed values in the current period, and obtaining a rotational speed indicating parameter of the flowmeter in the current period.

In combination with the first aspect, in some embodiments, the triggering a start of metering a beverage output quantity of the current beverage brewing includes: triggering a start of counting revolutions of the flowmeter; and determining that the beverage output quantity metered reaches a target beverage quantity when the revolutions of the flowmeter reach a target revolution number.

In combination with the first aspect, in some embodiments, the method further includes: obtaining, when it is determined that the brewing unit enters a pressurizing stage according to the state change information, brewing duration before the brewing unit enters the pressurizing stage; and determining a solid material accommodating state in the brewing unit according to the brewing duration.

In combination with the first aspect, in some embodiments, the determining a solid material accommodating state in the brewing unit according to the brewing duration includes: determining that a solid material is accommodated in the brewing unit under the condition that the brewing duration is less than a preset time threshold; and determining that the brewing unit is in an empty state under the condition that the brewing duration is not less than the preset time threshold.

In combination with the first aspect, in some embodiments, the determining a solid material accommodating state in the brewing unit according to the brewing duration includes: comparing the brewing duration with a plurality of brewing time intervals constructed in advance, and determining a brewing time interval in which the brewing duration is located, where each brewing time interval corresponds to a solid material remainder parameter; and determining a solid material remainder in the brewing unit according to the brewing time interval in which the brewing duration is located.

In a second aspect, an embodiment of the present disclosure provides a device for controlling a beverage brewing process, applied to a beverage maker. A brewing unit of the beverage maker includes a pressurizing member for generating pressure in the brewing unit in the beverage brewing process, and a pipe supplying water to the brewing unit is provided with a flowmeter. The device for controlling a beverage brewing process includes: an information obtaining unit configured to supply water to the brewing unit in response to a start signal of current beverage brewing, and obtain state change information of the flowmeter, where the state change information is configured to indicate a rotational speed change trend of the flowmeter in a current beverage brewing process; a metering triggering unit configured to trigger a start of metering a beverage output quantity of the current beverage brewing when it is determined that the brewing unit enters a pressure maintenance stage according to the state change information; and a stop control unit configured to stop supplying water to the brewing unit when the beverage output quantity metered reaches a target beverage quantity.

In a third aspect, an embodiment of the present disclosure provides a beverage maker. The beverage maker includes: a brewing unit configured to brew a beverage with a solid material, where a pressurizing member is arranged at an outlet of the brewing unit for generating pressure in the brewing unit in a beverage brewing process; a water supply unit, where a water supply pipe of the water supply unit is provided with a flowmeter, and the water supply unit is configured to supply water to the brewing unit in the beverage brewing process of the brewing unit; and a controller including one or more processors and one or more memories, where the one or more memories store at least one program code, and the at least one program code is loaded and executed by the one or more processors, to implement the method according to any one of claims 1-9.

In combination with the third aspect, in some embodiments, the beverage maker is a coffee maker.

The one or more embodiments provided by the present disclosure have at least the following effects or advantages: the embodiments of the present disclosure is applicable to a beverage maker in which a brewing unit includes a pressurizing member for generating pressure in the brewing unit in a beverage brewing process and a water supply pipe is provided with a flowmeter. Since the pressurizing member can generate pressure in the brewing unit in the beverage brewing process, the brewing unit is conducted when the pressure reaches upper limit pressure of the pressurizing member, and the pressure is maintained stable. According to the embodiments of the present disclosure, the flowmeter arranged on the pipe for supplying water to the brewing unit is used, it is determined whether the brewing unit enters the pressure maintenance stage according to the state change information of the flowmeter in the current beverage brewing process; a start of metering a beverage output quantity of the current beverage brewing is triggered when it is determined that the brewing unit enters the pressure maintenance stage; and water supply to the brewing unit is stopped when the beverage output quantity metered reaches a target beverage quantity. Therefore, the influence of a filling stage and a pressurizing stage on the beverage output quantity is avoided, the beverage output quantity can be measured more accurately, and the accuracy of the beverage output quantity is improved. Moreover, without additional measurement member, measurement can be implemented only by an original flowmeter of the water supply pipe.

BRIEF DESCRIPTION OF THE DRAWINGS

In order to more clearly illustrate embodiments in the present disclosure, a brief introduction to the accompanying drawings required for the description of the embodiments will be provided below. Apparently, the accompanying drawings in the following description are some of the embodiments of the present disclosure, and those of ordinary skill in the art would further be able to derive other drawings from these drawings without making creative efforts.

Fig. 1 shows a partial structure of a beverage maker according to an embodiment of the present disclosure;

Fig. 2 shows a flow of a method for controlling a beverage brewing process according to an embodiment of the present disclosure;

Fig. 3 shows a time change of one revolution of a flowmeter during beverage brewing according to an embodiment of the present disclosure;

Fig. 4 shows functional devices of a device for controlling a beverage brewing process according to an embodiment of the present disclosure; and

Fig. 5 shows a structure of a controller in a beverage maker of Fig. 1.

## DETAILED DESCRIPTION OF THE DISCLOSURE

For making the objectives, embodiments and advantages the present disclosure more obvious, the embodiments of the present disclosure will be clearly and completely described below in conjunction with the accompanying drawings in the embodiments of the present disclosure, and obviously, the described embodiments are some embodiments rather than all embodiments of the present disclosure. Based on the embodiments of the present disclosure, all other embodiments obtained by those of ordinary skill in the art without making creative efforts fall within the scope of protection of the present disclosure.

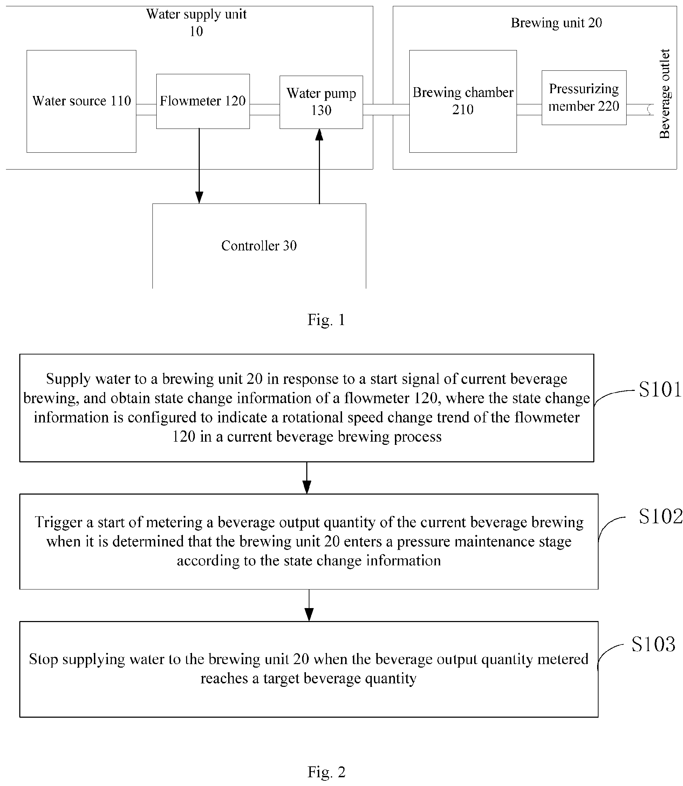

An embodiment of the present disclosure provides a beverage maker, which can be a product such as a coffee maker and a soybean milk maker that need water supply and generate certain pressure in a brewing process. With reference to Fig. 1, the beverage maker includes a water supply unit 10, a brewing unit 20, and a controller 30. The brewing unit 20 includes a pressurizing member 220 for generating pressure in the brewing unit 20 in a beverage brewing process. For example, the brewing unit 20 may include a brewing chamber 210. The brewing chamber 210 is configured to press falling powdered solid materials (for example, coffee powder) by movement. The brewing chamber 210 is provided with a water inlet and a water outlet. Other positions of the brewing chamber 210 are sealed. The water outlet of the brewing chamber 210 is provided with a back pressure valve as a pressurizing member 220 for generating pressure in the brewing unit 20 in the beverage brewing process.

The water supply unit 10 is configured to supply water required by the current beverage brewing process to the brewing unit 20 in the beverage brewing process. The water supply unit 10 at least includes a water source 110 and a water supply pipe connected between the water source 110 and the water inlet of the brewing chamber 210. The water supply pipe is provided with a flowmeter 120 and a water pump 130. Both of the flowmeter 120 and the water pump 130 are electrically connected to the controller 30. The water pump 130 is controlled by the controller 30 to pump water from the water source 110 to the brewing chamber 210.

The water pump 130 is controlled by the controller 30 to pump water from the water source 110 to the brewing chamber 210 as follows: the water pump 130 operates according to power given by the controller 30, in a water pumping process of the water pump 130, the flowmeter 120 rotates, each revolution of the flowmeter 120 generates one pulse signal, the generated pulse signal is transmitted to the controller 30 by a circuit board, the controller 30 calculates a time T1 of one revolution of the flowmeter 120 according to the pulse signal fed back by the flowmeter 120, and uses proportional-integral-derivative (PID) control and the calculated time T1 of one revolution of the flowmeter 120 for closed-loop control over the power of the water pump 130, and a flow of water supplied to the brewing unit 20 is stabilized at a set value.

An embodiment of the present disclosure provides a method for controlling a beverage brewing process, which can be applied to the beverage maker shown in Fig. 1. As shown in Fig. 2, the method for controlling a beverage brewing process provided in an embodiment of the present disclosure includes:

S101: supply water to a brewing unit 20 in response to a start signal of current beverage brewing, and obtain state change information of a flowmeter 120, where the state change information is configured to indicate a rotational speed change trend of the flowmeter 120 in a current beverage brewing process.

It can be understood that the start signal of the current beverage brewing may be generated based on an operation on a start button by a user. The controller 30 controls the water pump 130 to start in response to the start signal of the current beverage brewing, and the water pump 130 pumps water from the water source 110 to the brewing unit 20. The start signal of the current beverage brewing further triggers a start of obtaining state change information of the flowmeter 120.

It should be noted that the flowmeter 120 in the embodiment of the present disclosure is of a type that needs to convert a water supply flow into a rotational speed for flow measurement. For example, the flowmeter is a turbine flowmeter or a roots flowmeter, etc. In an implementation process, the state change information may be a time change of one revolution of the flowmeter 120, or may be a rotational speed change of the flowmeter 120 directly.

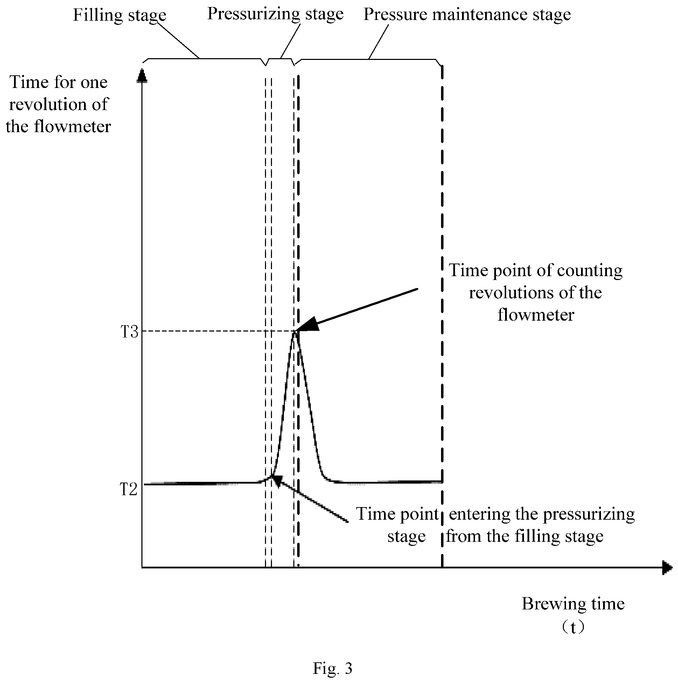

It should be noted that with reference to Fig. 3, from the start of brewing of the beverage maker, the brewing unit 20 sequentially passes through a filling stage, a pressurizing stage and a pressure maintenance stage. It should be explained that the filling stage refers to a phase in which water is supplied to the brewing unit 20 and fills a space in the brewing unit 20 (including the brewing chamber 220 and its pipes). Since the pressurizing member 220 is not active in the filling process, the pressure in the brewing unit 20 does not rise. The pressurizing stage refers to a stage in which the pressure in the brewing unit 20 is continuously increased due to the action of the pressurizing member 220 after filling is completed. The pressure maintenance stage refers to a stage in which the brewing unit is conducted when the pressure in the brewing unit 20 reaches upper limit pressure of the pressurizing member 220, and the pressure in the brewing unit 20 is maintained stable.

In response to the start signal of the current beverage brewing, the filling stage starts first: the water supply unit 10 starts supplying water to the brewing unit 20, and filling the space in the brewing unit 20 (including the brewing chamber 220 and its pipes). The controller 30 calculates the time for one revolution (or the rotational speed) of the flowmeter 120 according to the pulse signal fed back by the flowmeter 120, and performs PID for regulating the power of the water pump 130 according to the calculated time for one revolution (or the rotational speed) of the flowmeter 120, and the flow of the flowmeter 120 is stable at the set value. In this case, the time for one revolution of the flowmeter 120 is obtained as T2. After filling is completed, the brewing unit 20 enters the pressurizing stage under the pressurizing action of the pressurizing member 220: the pressure in the brewing chamber 220 of the brewing unit 20 increases, the pressure increase forces the flow of the water supply to slow down, the rotational speed of the flowmeter 120 slows down, and the time for one revolution of the flowmeter 120 gradually increases to T3 (T3>T2). The brewing chamber is conducted when the pressure in the brewing chamber 210 reaches the upper limit pressure of the pressurizing member 220, and the pressure in the brewing unit 20 does not rise, and the pressure in the brewing unit 20 is maintained stable and enters the pressure maintenance stage. In the pressure maintenance stage, along with the adjustment of the PID control, the flow of water supplied to the brewing unit 20 restores to the set value, and the time for one revolution of the flowmeter 120 is gradually shortened from T3 to T2. Therefore, as shown in Fig. 3, from the start of brewing, the time for one revolution of the flowmeter 120 is maintained at T2 for a period of time due to the PID control, then is gradually increased from T2 to T3 due to pressure, and is shortened from T3 to T2 due to the PID control after the pressure is stable. Thus, the start of the pressure maintenance stage is a time point at which the rotational speed of the flowmeter 120 changes from an increase state to a decrease state. In this case, the time for one revolution of the flowmeter 120 reaches a maximum value, and this time point can be regarded as a time point at which the brewing unit 20 enters the pressure maintenance stage.

It can be understood that in order to obtain the state change information of the flowmeter 120 in the current brewing process, a rotational speed indicating parameter of the flowmeter 120 is obtained according to a preset period in response to the start signal of current beverage brewing; and a rotational speed indicating parameter obtained at a current time is compared with a rotational speed indicating parameter obtained at a last time each time when a rotational speed indicating parameter of the flowmeter 120 is obtained, and the state change information of the flowmeter 120 in the current beverage brewing process is determined.

In an embodiment, the rotational speed indicating parameter may be a rotational speed of the flowmeter 120 or a time parameter of one revolution of the flowmeter 120. The following steps are triggered to be executed once each time the rotational speed indicating parameter of the flowmeter 120 is obtained: compare a rotational speed indicating parameter obtained at a current time with a rotational speed indicating parameter obtained at a last time, it is determined whether the rotational speed of the flowmeter 120 changes or whether the time for one revolution of the flowmeter 120 changes, and the state change information of the flowmeter 120 in the current beverage brewing process can be determined.

Since the rotational speed of the flowmeter 120 fluctuates, in order to improve the accuracy of the rotational speed indicating parameter, the rotational speed indicating parameter obtained each time is an average value of a plurality of consecutive sampling values: in response to the start signal of the current beverage brewing, the rotational speed or a time value of one revolution of the flowmeter 120 is sampled according to a preset sampling interval, n time values or n rotational speed values in a current period are correspondingly obtained, a mean value of the n time values or the n rotational speed values in the current period is calculated, and a rotational speed indicating parameter of the flowmeter 120 in the current period is obtained, where n is an integer greater than 1.

S102, trigger a start of metering a beverage output quantity of the current beverage brewing when it is determined that the brewing unit 20 enters a pressure maintenance stage according to the state change information.

It can be understood that it is determined that the brewing unit 20 enters the pressure maintenance stage under the condition that the state change information indicates that the rotational speed of the flowmeter 120 is at an inflection point at which the rotational speed changes from decrease to increase.

Under the condition that the rotational speed indicating parameter is a time parameter of one revolution of the flowmeter 120, it is indicated that the rotational speed of the flowmeter 120 is at the inflection point at which the rotational speed changes from decrease to increase under the condition that the state change information satisfies that a current time parameter of one revolution of the flowmeter 120 is not greater than a difference between a last time parameter of one revolution of the flowmeter 120 and a preset correction constant, and the last time parameter of one revolution of the flowmeter 120 is not less than a sum of a before-last time parameter of one revolution of the flowmeter 120 and the preset correction constant, and it can be determined that the brewing unit 20 enters the pressure maintenance stage.

Since the rotational speed of the flowmeter 120 fluctuates, in order to improve the accuracy, a correction constant may be set to more accurately determine whether the rotational speed of the flowmeter 120 is at the inflection point at which the rotational speed changes from decrease to increase: it is determined that the rotational speed of the flowmeter 120 is at the inflection point at which the rotational speed changes from decrease to increase under the condition that the state change information satisfies that a current time parameter of one revolution of the flowmeter 120 is not greater than a difference between a last time parameter of one revolution of the flowmeter 120 and a preset correction constant, and the last time parameter of one revolution of the flowmeter 120 is not less than a sum of the preset correction constant and a before-last time parameter of one revolution of the flowmeter 120, and it can be determined that the brewing unit 20 enters the pressure maintenance stage.

With reference to Fig. 3, with the last time parameter of one revolution of the flowmeter 120 represented as M1, the current time parameter of one revolution of the flowmeter 120 being represented as M2, and the preset correction constant being represented as $\alpha$ as an embodiment, under the condition that M1+$\alpha$<=M2 is satisfied, it indicates that the brewing unit 20 is in the pressurizing stage. Under the condition that M2<=M1-$\alpha$ is satisfied after next collection of the time parameter of one revolution of the flowmeter 120, it indicates that the rotational speed of the flowmeter 120 has an inflection point at which the rotational speed changes from decrease to increase, and indicates that the brewing unit 20 enters the pressure maintenance stage.

According to the above implementation principle, when the rotational speed indicating parameter is the rotational speed of the flowmeter 120, how to accurately determine whether the rotational speed of the flowmeter 120 is at the inflection point at which the rotational speed changes from decrease to increase, and then accurately determine whether the brewing unit 20 enters the pressure maintenance stage can be known, which are not repeated herein for brevity of the specification.

In S102, the step of triggering a start of metering a beverage output quantity of the current beverage brewing may include: trigger a start of counting revolutions of the flowmeter 120; and determine the beverage output quantity metered reaches a target beverage quantity when the revolutions of the flowmeter 120 reach a target revolution number. It should be noted that the target beverage quantity may be the quantity set by the user for the current beverage brewing, or may be a fixed value used for each time of beverage brewing.

S103, stop supplying water to the brewing unit 20 when the beverage output quantity metered reaches a target beverage quantity.

When the beverage output quantity metered reaches the target beverage quantity, the water pump 130 is controlled to stop, the water supply unit 10 stops supplying water to the brewing unit 20, and a beverage outlet stops outputting beverages.

Since the counting of revolutions of the flowmeter 120 is started only when the pressure maintenance phase starts, the situation that no beverage is output from the beverage outlet although the flowmeter 120 is rotating in the filling stage and the pressurizing stage because the revolutions of the flowmeter 120 in the filling stage and the pressurizing stage are counted in the beverage output quantity is avoided. Moreover, the filling stage may cause different filling water amounts depending on structures of the pipes, and the pressurizing stage may further cause the counting of the flowmeter 120 to be unstable. Therefore, counting the revolutions of the flowmeter 120 in the filling stage and the pressurizing stage into the beverage output quantity may cause a large deviation in the flow. In the embodiment of the present disclosure, on the premise of adding no hardware, the original flowmeter 120 is used to determine a time point of entering the pressure maintenance stage, and measuring the beverage output quantity can be accurately started, and then improving the accuracy of the beverage output quantity.

It can be understood that after S101, S 104-S 105 may be further included:
S104, obtain, when it is determined that the brewing unit 20 enters a pressurizing stage according to the state change information, brewing duration before the brewing unit 20 enters the pressurizing stage.

It can be understood that when rotational speed indicating information is a time parameter of one revolution of the flowmeter 120, it is determined that the brewing unit 20 enters the pressurizing stage under the condition that the state change information satisfies that a current time parameter of the flowmeter 120 is greater than a last time parameter of the flowmeter 120, which indicates that the time for one revolution of the flowmeter 120 is longer.

Since the rotational speed of the flowmeter 120 fluctuates, a correction constant may be set to more accurately determine whether the brewing unit 20 enters the pressurizing stage in order to improve the accuracy. Therefore, the step of determining whether the brewing unit 20 enters the pressurizing stage according to the state change information of the flowmeter 120 may include: under the condition that the first rotational speed change indicating information indicates that the current time parameter of the flowmeter 120 is greater than the sum of the last time parameter of the flowmeter 120 and the preset correction constant, which indicates that the rotational speed of the flowmeter 120 is in a speed decrease state, determine that the brewing unit 20 enters a pressurizing stage; and under the condition that the state change information indicates that the current time parameter of one revolution of the flowmeter 120 is not greater than the sum of the preset correction constant and the last time parameter of one revolution of the flowmeter 120 e, and is not less than the difference between the last time parameter of one revolution of the flowmeter 120 and the preset correction constant, which indicates that the rotational speed of the flowmeter 120 is in a stable state, determine that the brewing unit 20 has not entered the pressurizing stage, and is still in the filling stage.

According to the above implementation principle, when the rotational speed indicating parameter is the rotational speed of the flowmeter 120, how to accurately determine whether the rotational speed of the flowmeter 120 is at the time point at which the rotational speed changes from stability to decrease, and then accurately determine the time point at which the brewing unit 20 enters the pressurizing stage can be known, which are not repeated herein for brevity of the specification.

It can be understood that the step of obtaining brewing duration before the brewing unit 20 enters the pressurizing stage in S104 may include: in response to a start signal of current beverage brewing, start a timer to time a brewing time of the current beverage brewing; obtain current timing duration of the timer when it is determined that the brewing unit 20 enters the pressurizing stage according to the state change information of the flowmeter 120; and take the current timing duration of the timer as the brewing duration of the brewing unit 20. It should be noted that with reference to Fig. 3, the brewing duration is a time elapsing from the start of brewing and before the brewing unit 20 enters the pressurizing stage, that is, a time of the filling stage of the brewing unit 20, in the current beverage brewing process.

S105, determine a solid material accommodating state in the brewing unit 20 according to the brewing duration.

It can be understood that the step of determining a solid material accommodating state in the brewing unit 20 in S105 may be to merely determine two accommodating states where the brewing unit 20 accommodates a solid material or not. It is determined that a solid material is accommodated in the brewing unit 20 under the condition that the brewing duration is less than a preset time threshold; and it is determined that the brewing unit 20 has no solid material, that is, is in an empty state under the condition that the brewing timing duration is not less than the preset time threshold.

It should be noted that the preset time threshold is pre-measured: a beverage maker is controlled to execute an empty test process in an empty state of the brewing unit 20; and first test change information of the flowmeter 120 in the empty test process is obtained, and first brewing duration of the brewing unit 20 is obtained as a preset time threshold when it is determined that the brewing unit 20 enters the pressurizing stage according to the first test change information. In an embodiment, the first brewing duration indicates duration elapsing from the start of brewing and before the brewing unit 20 enters the pressurizing stage in the empty test process, that is, duration which the brewing unit 20 is in the filling stage in the empty state of the brewing unit 20.

In a particular implementation process, the timer starts timing in response to a trigger signal controlling the beverage maker to execute an empty test process; and when it is determined that the brewing unit 20 enters the pressurizing stage in the empty test process according to the first test change information, current timing duration of the timer is obtained as a preset time threshold.

For example, after the empty test process, the preset time threshold is 15 seconds. It is determined that a solid material is accommodated in the brewing unit 20 under the condition that the brewing duration is less than 15 seconds; and it is determined that the brewing unit 20 has no solid material and is in an empty state under the condition that the brewing duration is not less than 15 seconds.

More precisely, the determining a solid material accommodating state in the brewing unit 20 in S105 may further be to determine a solid material remainder in the brewing unit 20. The brewing duration is compared with a plurality of brewing time intervals constructed in advance, and a brewing time interval in which the brewing duration is located is determined, where each brewing time interval corresponds to a solid material remainder parameter; and a solid material remainder in the brewing unit 20 is determined according to the brewing time interval in which the brewing duration is located.

It should be noted that the more the brewing time intervals constructed in advance is, the more accurate the measurement of the solid material remainder in the brewing unit 20 in S105 is. Three or more brewing time intervals can be constructed in advance, where the brewing time intervals correspond one-to-one to the solid material remainder parameters. With three brewing time intervals constructed in advance as an embodiment, the solid material remainder parameters corresponding one-to-one to the three brewing time intervals include a full state, a half state, and an empty state. With four brewing time intervals constructed in advance as an embodiment, the solid material remainder parameters corresponding one-to-one to the four brewing time intervals include a full state, a 2/3 state, a 1/3 state, and an empty state. With five brewing time intervals constructed in advance as an embodiment, the solid material remainder parameters corresponding one-to-one to the five brewing time intervals include a full state, a 3/4 state, a 2/4 state, a 1/4 state, and an empty state.

For example, three brewing time intervals A, B and C with increasing brewing times in sequence are constructed in advance, under the condition that the brewing duration falls within the interval A, it is determined that the brewing unit 20 is in the full state; under the condition that the brewing duration falls within the interval B, it is determined that the brewing unit 20 is in the 1/2 state; under the condition that the brewing duration falls within the interval C, it is determined that the brewing unit 20 is in the empty state.

It can be understood that a plurality of brewing time intervals may be constructed in advance and written into a memory of the beverage maker. A process of constructing a plurality of brewing time intervals in advance may include S201-S203:

S201: control the beverage maker to execute an empty test process in an empty state of the brewing unit 20; obtain first test change information of the flowmeter 120 in the empty test process; and determine whether the brewing unit 20 enters the pressurizing stage according to the first test change information, and obtain first brewing duration of the brewing unit 20 when it is determined that the brewing unit 20 enters the pressurizing stage according to the first test change information.

The first test change information is configured to indicate a rotational speed change trend of the flowmeter 120 in the empty test process. It can be understood that in response to a trigger signal initiating the empty test process, a timer starts timing; it is determined whether the brewing unit 20 enters the pressurizing stage according to the first test change information of the flowmeter 120 in the empty test process, and current timing duration of the timer is obtained as the first brewing duration when it is determined that the brewing unit 20 enters the pressurizing stage according to the first test change information.

S202, control the beverage maker to execute a full test process under a full state of the brewing unit 20, and obtain second test change information of the flowmeter 120 in the full test process; and determine whether the brewing unit 20 enters the pressurizing stage according to the second test change information, and obtain second brewing duration of the brewing unit 20 when it is determined that the brewing unit 20 enters the pressurizing stage according to the second test change information.

The second test change information is configured to indicate a rotational speed change trend of the flowmeter 120 in the full test process. It can be understood that in response to a trigger signal initiating the full test process, a timer starts timing; it is determined whether the brewing unit 20 enters the pressurizing stage according to the second test change information of the flowmeter 120 in the full test process, and current timing duration of the timer is obtained as the second brewing duration when it is determined that the brewing unit 20 enters the pressurizing stage according to the second test change information.

It should be noted that in the full test process and the empty test process in S201 and S202, reference may be made to an implementation mode of determining whether the brewing unit 20 enters a pressure maintenance stage in the current beverage brewing process in S102 for an implementation mode of determining whether the brewing unit 20 enters the pressurizing stage according to the state change information of the flowmeter 120: in the full test process (or empty test process), a time parameter of the flowmeter 120 is obtained according to a preset period; and time parameters obtained every two adjacent times are compared to determine the state change information of the flowmeter 120 in the full test process (or empty test process). Reference may be made to the description of S102 for more implementation details, which is not repeated herein for brevity of the specification.

S203, construct a plurality of brewing time intervals according to the second brewing duration and the first brewing duration.

It can be understood that under the condition that the number of brewing time intervals to be constructed is M, and M is an integer greater than 2, S203 may include S2031-S2032:

S2031, determine a brewing time difference indicating the brewing unit 20 in different accommodating state according to the first brewing duration and the second brewing duration. A difference between the first brewing duration and the second brewing duration may be directly used as the brewing time difference. For example, if the first brewing duration is T2a, and the second brewing duration is T2b, the difference between the first brewing duration and the second brewing duration is T2a-T2b.

S2032, determine M-1 brewing time levels according to the second brewing duration, the brewing time difference, and a proportional constant corresponding to each brewing time level.

It should be noted that the proportional constant corresponding to each brewing time level in the M-1 brewing time levels is different, and the proportional constant of each brewing time level is set according to the number of the brewing time intervals to be constructed. In an embodiment, the proportional constant corresponding to each brewing time grade may be set to be i/M, where i represents the ith brewing time level in the M-1 brewing time levels.

For example, three brewing time intervals with times gradually increasing need to be constructed in advance, two brewing time levels need to be set, one brewing time level corresponds to a proportional constant of 1/3, and the other brewing time level corresponds to a proportional constant of 2/3. For example, four brewing time intervals with times gradually increasing need to be constructed in advance, three brewing time levels need to be set, and the corresponding proportional constants are 1/4, 2/4 and 3/4 in sequence. For example, five brewing time intervals with times gradually increasing need to be constructed in advance, four brewing time levels need to be set, and the corresponding proportional constants are 1/5, 2/5, 3/5 and 4/5 in sequence. By analogy, no matter how many brewing time intervals need to be constructed, the proportional constant for each brewing time level can be determined.

M-1 product results are obtained by multiplying each proportional constant with a brewing time difference (T2a-T2b); and the M-1 product results are added to the second brewing duration separately to obtain the M-1 brewing time levels:

T2b+i(T2a-T2b)/M, where a value of i is 1 to M-1 in sequence.

That is to say, the obtained M-1 brewing time levels are as follows: T2b+(T2a-T2b)/M, T2b+2*(T2a-T2b)/M, T2b+3*(T2a-T2b)/M, T2b+4*(T2a-T2b)/M, ......

S2033, construct M brewing time intervals by using the M-1 brewing time levels as interval boundaries.

The M constructed brewing time intervals are as follows: t<T2b+(T2a-T2b)/M, T2b+1*(T2a-T2b)/M≤t≤T2b+2* (T2a-T2b)/M, T2b+2*(T2a-T2b)/M≤t≤T2a+3*(T2aT2b)/M, T2b+3 *(T2a-T2b)/M≤t≤T2b+4*(T2a-T2b)/M, T2b+4* (T2aT2b)/M≤t≤T2b+5*(T2a-T2b)/M, and so on. For ease of understanding, with five constructed brewing time intervals as an embodiment, explanation is as follows with reference to Table 1:

Table 1

| t<T2b+(T2a-T2b)/5 | Full state |
|---|---|
| T2b+1*(T2a-T2b)/5≤t≤T2b+2*(T2a-T2b)/5 | 3/4 state |
| T2b+2*(T2a-T2b)/5≤t≤T2b+3*(T2a-T2b)/5 | 2/4 state |
| T2b+3*(T2a-T2b)/5≤t≤T2b+4*(T2a-T2b)/5 | 1/4 state |
| t>T2b+4*(T2a-T2b)/5 | Empty state |

With the five brewing time intervals constructed in advance as shown in Table 1 above as an embodiment, under the condition that the brewing duration t satisfies t<T2b+(T2a-T2b)/5, it is determined that the brewing unit 20 is in a full state; under the condition that the brewing duration t satisfies T2b+1*(T2a-T2b)/5≤t≤T2b+2*(T2a-T2b)/5, it is determined that the brewing unit 20 is in a 3/4 state, that is, 3/4 of powder currently remains in the brewing unit 20; under the condition that the brewing duration t satisfies T2b+2*(T2a-T2b)/5≤t≤T2b+3*(T2a-T2b)/5, it is determined that the brewing unit 20 is in a 2/4 state, that is, 2/4 of powder currently remains in the brewing unit 20; under the condition that the brewing duration t satisfies T2b+3*(T2a-T2b)/5≤t≤T2b+4*(T2a-T2b)/5, it is determined that the brewing unit 20 is in a 1/4 state, that is, 1/4 of powder currently remains in the brewing unit 20; and under the condition that the brewing duration t satisfies t>T2b+4* (T2a-T2b)/5, it is determined that the brewing unit 20 is in an empty state, that is, there is no solid material currently in the brewing unit 20.

In order to facilitate understanding of the embodiment provided in the present disclosure, with the beverage maker being a coffee maker as an example, a water supply unit 10 of the coffee maker sequentially includes a water tank, a flowmeter 120, a water pump 130 and a heating disk for heating supplied water, where the flow meter, the water pump and the heating disk are sequentially connected through a water supply pipe, a water outlet of the heating disk is connected to a water inlet of a brewing chamber 210 of the brewing unit 20, a water outlet of the brewing chamber 210 is provided with a back pressure valve, and a coffee outlet is arranged behind the back pressure valve. The control over a coffee brewing process of the coffee maker is described below:

First, a user operates a start button of the coffee maker to start current coffee brewing. The following controls are synchronously triggered and executed: 1. the water pump 130 is controlled to start, and a controller 30 controls operating power of the water pump 130, to stabilize a flow at a set value. 2. A time of one revolution of the flowmeter 120 every $\Delta T$ is recorded, and is continuously recorded n times, and then a mean value is calculated as a rotational speed indicating parameter M2 obtained at a current time. 3. A timer starts timing brewing; where

when a rotational speed indicating parameter M2 is obtained, the rotational speed indicating parameter is compared with a rotational speed indicating parameter M2 obtained last time:

filling stage:

$$M1-\alpha<=M2<=M1+\alpha;$$

pressurizing stage:

$$M1+\alpha<=M2;$$

and

pressure maintenance stage:

$$M2<=M1-\alpha;$$

when M1+α<=M2 is satisfied for the first time, it is determined that the filling stage ends, a time point of entering the pressurizing stage starts, current timing duration of the timer at this time is obtained, and a coffee powder remainder in the brewing chamber 210 is determined based on the current timing duration; and a time point when M2<=M1-α is satisfied for the first time is taken as a start point for calculating a coffee output quantity, the revolutions of the flowmeter 120 are started to be counted, and when the revolutions reach a set revolution number, the water pump 130 is controlled to stop, and the current coffee brewing is completed.

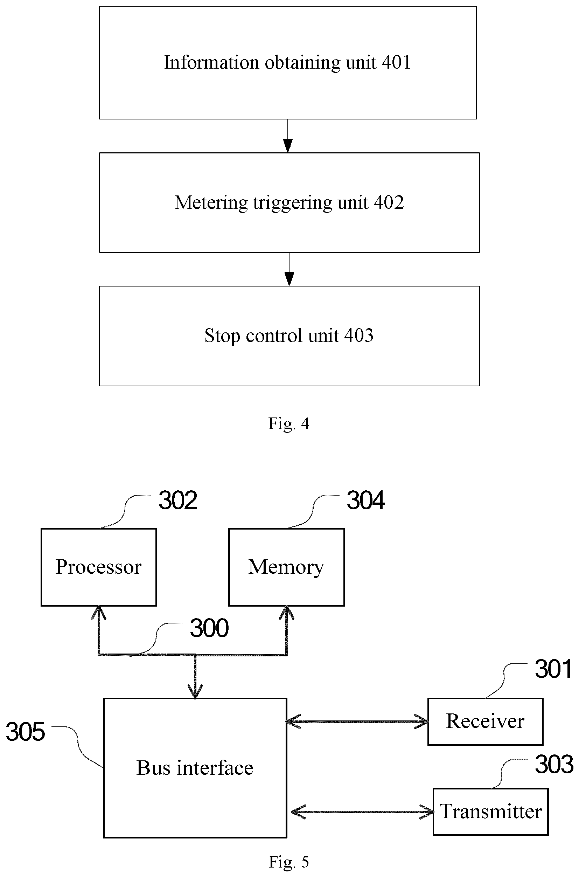

Based on the same inventive concept, an embodiment of the present disclosure provides a device for controlling a beverage brewing process, applied to a beverage maker. With reference to Fig. 1, a brewing unit 20 of the beverage maker includes a pressurizing member for generating pressure in the brewing unit 20 in the beverage brewing process, and a pipe supplying water to the brewing unit 20 is provided with a flowmeter 120. With reference to Fig. 4, the device for controlling a beverage brewing process includes: an information obtaining unit 401 configured to supply water to the brewing unit 20 in response to a start signal of current beverage brewing, and obtain state change information of the flowmeter 120, where the state change information is configured to indicate a rotational speed change trend of the flowmeter 120 in a current beverage brewing process; a metering triggering unit 402 configured to trigger a start of metering a beverage output quantity of the current beverage brewing when it is determined that the brewing unit 20 enters a pressure maintenance stage according to the state change information; and a stop control unit 403 configured to stop supplying water to the brewing unit 20 when the beverage output quantity metered reaches a target beverage quantity.

It can be understood that the device for controlling a beverage brewing process further includes a stage judgment unit configured to determine that the brewing unit 20 enters the pressure maintenance stage under the condition that the state change information indicates that the rotational speed of the flowmeter 120 is at an inflection point at which the rotational speed changes from decrease to increase.

It can be understood that the information obtaining unit 401 is configured to obtain a rotational speed indicating parameter of the flowmeter 120 according to a preset period in response to the start signal of current beverage brewing; and compare a rotational speed indicating parameter obtained at a current time with a rotational speed indicating parameter obtained at a last time each time when a rotational speed indicating parameter of the flowmeter 120 is obtained, and determine the state change information of the flowmeter 120 in the current beverage brewing process.

It can be understood that the rotational speed indicating parameter is a time parameter of one revolution of the flowmeter 120, and the stage determination unit is configured to determine that the rotational speed of the flowmeter 120 is at the inflection point at which the rotational speed changes from decrease to increase under the condition that the state change information satisfies that a current time parameter of one revolution of the flowmeter 120 is not greater than a difference between a last time parameter of one revolution of the flowmeter 120 and a preset correction constant, and the last time parameter of one revolution of the flowmeter 120 is not less than a sum of the preset correction constant and a before-last time parameter of one revolution of the flowmeter 120.

It can be understood that the information obtaining unit 401 is configured to sample the rotational speed or a time value of one revolution of the flowmeter 120 according to a preset sampling interval in each period, and correspondingly obtain n time values or n rotational speed values in a current period; and calculate a mean value of the n time values or the n rotational speed values in the current period, and obtain a rotational speed indicating parameter of the flowmeter 120 in the current period.

It can be understood that the metering triggering unit 402 is configured to trigger a start of counting revolutions of the flowmeter 120; and determine the beverage output quantity metered reaches a target beverage quantity when the revolutions of the flowmeter 120 reach a target revolution number.

It can be understood that the device for controlling a beverage brewing process further includes: a duration determining unit configured to obtain, when it is determined that the brewing unit 20 enters a pressurizing stage according to the state change information, brewing duration before the brewing unit 20 enters the pressurizing stage; and a stage determination unit configured to determine a solid material accommodating state in the brewing unit 20 according to the brewing duration.

It can be understood that the stage determination unit is configured to determine that a solid material is accommodated in the brewing unit 20 under the condition that the brewing duration is less than a preset time threshold; and determine that the brewing unit 20 is in an empty state under the condition that the brewing duration is not less than the preset time threshold.

It can be understood that the stage determination unit is configured to compare the brewing duration with a plurality of brewing time intervals constructed in advance, and determine a brewing time interval in which the brewing duration is located, where each brewing time interval corresponds to a solid material remainder parameter; and determine a solid material remainder in the brewing unit 20 according to the brewing time interval in which the brewing duration is located.

The device for controlling a beverage brewing process in the embodiment is used to implement the foregoing method for controlling a beverage brewing process. Therefore, reference may be made to the foregoing method for controlling a beverage brewing process for more implementation details of the device for controlling a beverage brewing process, which is not repeated herein for brevity of the specification.

With reference to Fig. 5, the embodiment of the present disclosure provides a beverage maker. A controller 30 includes one or more processors 302 and one or more memories 304, where the one or more memories 304 store at least one program code, and the at least one program code is loaded and executed by the one or more processors 302, to implement the method for controlling a beverage brewing process according to any one of embodiments of the first aspect.

In Fig. 5, a bus architecture is represented by a bus 300. The bus 300 may include any number of interconnected buses and bridges, the bus 300 connects various circuits of one or more processors represented by the processor 302, and a memory represented by the memory 304, together. The bus 300 may further connect various other circuits, for example, a peripheral, a voltage regulator, a power management circuit, etc., which are well known in the art, and therefore, will not be described any further herein. A bus interface 305 provides an interface between the bus 300 and a receiver 301 as well as a transmitter 303. The receiver 301 and the transmitter 303 may be the same member, that is, a transceiver, which provides a unit for communicating with various other devices over a transmission medium. The processor 302 is responsible for managing a bus 300 and general processing, and the memory 304 may be configured to store data used by the processor 302 in execution operations.

The functions described herein can be implemented in hardware, software executed by a processor, firmware, or any combination of any of those. Under the condition that implemented in software executed by a processor, the functions can be stored on or transmitted via a computer-readable medium as one or more instructions or codes. Other instances and implementation solutions are within the scope and spirit of the present disclosure and appended claims. For example, due to the nature of software, the functions described above can be implemented by software executed by a processor, hardware, firmware, hardwiring, or a combination of any of those. Moreover, each functional unit may be integrated in one processing unit, or each unit may exist separately and physically, or two or more units may be integrated in one unit.

In several embodiments provided in the present disclosure, it should be understood that the disclosed technology may be implemented in other ways. The device embodiments described above are merely illustrative. For example, a division of the units may be a division of logical functions, and in practice there may be additional ways of division. For example, a plurality of units or assemblies may be combined or integrated into another system, or some features may be neglected or not performed. Moreover, mutual coupling or direct coupling or communication connection as shown or discussed may be indirect coupling or communication connection by some interfaces, units or devices, and may be in an electrical form or a different form.

The units illustrated as separate components may be physically separated or not, and the components shown as controlling devices may be physical units or not, that is, may be located in one place, or may further be distributed over a plurality of units. Some or all of the units may be selected according to actual needs to achieve the objective of the solution of the embodiments.

The integrated units may be stored in a computer readable storage medium if implemented in the form of a software functional unit and sold or used as an independent product. Based on such understanding, the embodiment of the present disclosure can be embodied in the form of a software product in essence or a part contributing to the prior art or all or part of the embodiment, and the computer software product is stored in a storage medium and includes several instructions for making a computer apparatus (which can be a personal computer, a server or a network device, etc.) execute all or some of the steps of the methods described in the various embodiments of the present disclosure. The foregoing storage medium includes a USB flash disk, a read-only memory (ROM), a random access memory (RAM), a mobile hard disk, a magnetic disk, an optical disk and other media capable of storing program codes.

**Claims**

1. A method for controlling a beverage brewing process, applied to a beverage maker, wherein a brewing unit (20) of the beverage maker comprises a pressurizing member (220) for generating pressure in the brewing unit (20) in the beverage brewing process, a pipe supplying water to the brewing unit (20) is provided with a flowmeter (120), and the method comprises:

   supplying (S101) water to the brewing unit (20) in response to a start signal of current beverage brewing, and obtaining state change information of the flowmeter (120), wherein the state change information is configured to indicate a rotational speed change trend of the flowmeter (120) in a current beverage brewing process;
   triggering (S102) a start of metering a beverage output quantity of the current beverage brewing when it is determined that the brewing unit (20) enters a pressure maintenance stage according to the state change information; and
   stopping (S103) supplying water to the brewing unit (20) when the beverage output quantity metered reaches a target beverage quantity.

**2.** The method according to claim 1, further comprising:
determining that the brewing unit (20) enters the pressure maintenance stage under the condition that the state change information indicates that a rotational speed of the flowmeter (120) is at an inflection point at which the rotational speed changes from decrease to increase.

**3.** The method according to claim 2, wherein the obtaining state change information of the flowmeter (120) comprises:

obtaining a rotational speed indicating parameter of the flowmeter (120) according to a preset period in response to the start signal of current beverage brewing; and
comparing a current rotational speed indicating parameter with a last rotational speed indicating parameter each time when a rotational speed indicating parameter of the flowmeter (120) is obtained, and determining the state change information of the flowmeter (120) in the current beverage brewing process.

**4.** The method according to claim 3, wherein the rotational speed indicating parameter is a time parameter of one revolution of the flowmeter (120), and the method further comprises:
determining that the rotational speed of the flowmeter (120) is at the inflection point at which the rotational speed changes from decrease to increase under the condition that the state change information satisfies that a current time parameter of one revolution of the flowmeter (120) is not greater than a difference between a last time parameter of one revolution of the flowmeter (120) and a preset correction constant, and the last time parameter of one revolution of the flowmeter (120) is not less than a sum of the preset correction constant and a before-last time parameter of one revolution of the flowmeter (120).

**5.** The method according to claim 3, wherein the obtaining a rotational speed indicating parameter of the flowmeter (120) according to a preset period comprises:

sampling the rotational speed or a time value of one revolution of the flowmeter (120) according to a preset sampling interval in each period, and correspondingly obtaining n time values or n rotational speed values in a current period; and
calculating a mean value of the n time values or the n rotational speed values in the current period, and obtaining a rotational speed indicating parameter of the flowmeter (120) in the current period.

**6.** The method according to claim 1, wherein the triggering a start of metering a beverage output quantity of the current beverage brewing comprises:

triggering a start of counting revolutions of the flowmeter (120); and
determining that the beverage output quantity metered reaches the target beverage quantity when the revolutions of the flowmeter (120) reach a target revolution number.

**7.** The method according to claim 1, further comprising:

obtaining, when it is determined that the brewing unit (20) enters a pressurizing stage according to the state change information, brewing duration before the brewing unit (20) enters the pressurizing stage; and
determining a solid material accommodating state in the brewing unit (20) according to the brewing duration.

**8.** The method according to claim 7, wherein the determining a solid material accommodating state in the brewing unit (20) according to the brewing duration comprises:

determining that a solid material is accommodated in the brewing unit (20) under the condition that the brewing duration is less than a preset time threshold; and
determining that the brewing unit (20) is in an empty state under the condition that the brewing duration is not less than the preset time threshold.

**9.** The method according to claim 7, wherein the determining a solid material accommodating state in the brewing unit (20) according to the brewing duration comprises:

comparing the brewing duration with a plurality of brewing time intervals constructed in advance, and determining a brewing time interval in which the brewing duration is located, wherein each brewing time interval corresponds to a solid material remainder parameter; and

determining a solid material remainder in the brewing unit (20) according to the brewing time interval in which the brewing duration is located.

10. A device for controlling a beverage brewing process, applied to a beverage maker, wherein a brewing unit (20) of the beverage maker comprises a pressurizing member (220) for generating pressure in the brewing unit (20) in the beverage brewing process, a pipe supplying water to the brewing unit (20) is provided with a flowmeter (120), and the device for controlling a beverage brewing process comprises:

an information obtaining unit (401) configured to supply (S101) water to the brewing unit (20) in response to a start signal of current beverage brewing, and obtain state change information of the flowmeter (120), wherein the state change information is configured to indicate a rotational speed change trend of the flowmeter (120) in a current beverage brewing process;

a metering triggering unit (402) configured to trigger (S102) a start of metering a beverage output quantity of the current beverage brewing when it is determined that the brewing unit (20) enters a pressure maintenance stage according to the state change information; and

a stop control unit (403) configured to stop (S103) supplying water to the brewing unit (20) when the beverage output quantity metered reaches a target beverage quantity.

11. A beverage maker, comprising:

a brewing unit (20) configured to brew a beverage with a solid material, wherein a pressurizing member (220) is arranged at an outlet of the brewing unit (20) for generating pressure in the brewing unit (20) in a beverage brewing process;

a water supply unit (10), wherein a water supply pipe of the water supply unit (10) is provided with a flowmeter (120), and the water supply unit (10) is configured to supply water to the brewing unit (20) in the beverage brewing process of the brewing unit (20); and

a controller (30) comprising one or more processors (302) and one or more memories (304), wherein the one or more memories (304) store at least one program code, and the at least one program code is loaded and executed by the one or more processors (302), to implement the method according to any one of claims 1 to 9.

12. The beverage maker according to claim 11, wherein the beverage maker is a coffee maker.

**Patentansprüche**

1. Verfahren zum Steuern eines Getränkebrühprozesses, angewandt auf eine Getränkemaschine, wobei eine Brüheinheit (20) der Getränkemaschine ein druckerzeugendes Element (220) zum Erzeugen von Druck in der Brüheinheit (20) im Getränkebrühprozess umfasst, eine Rohrleitung zum Zuführen von Wasser zur Brüheinheit (20) mit einem Durchflussmesser (120) ausgerüstet ist, und das Verfahren Folgendes umfasst:

Zuführen (S101) von Wasser zur Brüheinheit (20) in Antwort auf ein Startsignal des aktuellen Getränkebrühablaufs, und Erfassen von Zustandsänderungsinformation des Durchflussmessers (120), wobei die Zustandsänderungsinformation konfiguriert ist, einen Änderungstrend der Rotationsgeschwindigkeit des Durchflussmessers (120) in einem aktuellen Getränkebrühprozess anzugeben;

Auslösen (S102) eines Starts des Abmessens einer Getränkeausgabemenge aus dem aktuellen Getränkebrühablauf, wenn gemäß der Zustandsänderungsinformation bestimmt wird, dass die Brüheinheit (20) in eine druckbewahrende Phase eintritt;

Stoppen (S103) des Zuführens von Wasser zur Brüheinheit (20), wenn die abgemessene Getränkeausgabemenge eine Zielgetränkemenge erreicht.

2. Verfahren nach Anspruch 1, ferner umfassend:
Bestimmen, dass die Brüheinheit (20) in die druckbewahrende Phase eintritt unter der Bedingung, dass die Zustandsänderungsinformation angibt, dass eine Rotationsgeschwindigkeit des Durchflussmessers (120) sich an einem Umkehrpunkt befindet, an dem die Rotationsgeschwindigkeit sich von Abnehmen auf Zunehmen ändert.

3. Verfahren nach Anspruch 2, wobei das Erfassen von Zustandsänderungsinformation des Durchflussmessers (120) Folgendes umfasst:

Erfassen eines Parameters des Durchflussmessers (120), der eine Rotationsgeschwindigkeit angibt gemäß einer voreingestellten Periode in Antwort auf das Startsignal des aktuellen Getränkebrühablaufs; und Vergleichen eines aktuellen Parameters, der eine Rotationsgeschwindigkeit angibt, mit einem letzten Parameter, der eine Rotationsgeschwindigkeit angibt, jedes Mal, wenn ein Parameter des Durchflussmessers (120), der eine Rotationsgeschwindigkeit angibt, erfasst wird, und Bestimmen der Zustandsänderungsinformation des Durchflussmessers (120) im aktuellen Getränkebrühprozess.

4. Verfahren nach Anspruch 3, wobei der Parameter, der eine Rotationsgeschwindigkeit angibt, ein Zeitparameter einer Umdrehung des Durchflussmessers (120) ist und das Verfahren ferner Folgendes umfasst:

Bestimmen, dass die Rotationsgeschwindigkeit des Durchflussmessers (120) sich an dem Umkehrpunkt befindet, an dem die Rotationsgeschwindigkeit sich von Abnehmen auf Zunehmen ändert, unter der Bedingung, dass die Zustandsänderungsinformation die Bedingung erfüllt, dass ein aktueller Zeitparameter von einer Umdrehung des Durchflussmessers (120) nicht größer als eine Differenz zwischen einem letzten Zeitparameter von einer Umdrehung des Durchflussmessers (120) und einer voreingestellten Korrekturkonstanten ist, und dass der letzte Zeitparameter des Durchflussmessers (120) nicht kleiner als eine Summe der voreingestellten Korrekturkonstanten und eines vorletzten Zeitparameters von einer Umdrehung des Durchflussmessers (120) ist.

5. Verfahren nach Anspruch 3, wobei das Erfassen eines Parameters des Durchflussmessers (120), der eine Rotationsgeschwindigkeit angibt, gemäß einer voreingestellten Periode Folgendes umfasst:

Proben der Rotationsgeschwindigkeit oder eines Zeitwertes einer Umdrehung des Durchflussmessers (120) gemäß einem voreingestellten Probenintervall in jeder Periode, und entsprechend Erfassen von n Zeitwerten oder n Rotationsgeschwindigkeitswerten in einer aktuellen Periode; und
Berechnen eines Mittelwertes der n Zeitwerte oder der n Rotationsgeschwindigkeitswerte in der aktuellen Periode, und Erfassen, in der aktuellen Periode, eines Parameters des Durchflussmessers (120), der eine Rotationsgeschwindigkeit angibt.

6. Verfahren nach Anspruch 1, wobei das Auslösen eines Starts des Abmessens einer Getränkeausgabemenge des aktuellen Getränkebrühvorgangs Folgendes umfasst:

Auslösen eines Starts des Zählens von Umdrehungen des Durchflussmessers (120); und
Bestimmen, dass die abgemessene Getränkeausgabemenge die Zielgetränkemenge erreicht, wenn die Umdrehungen des Durchflussmessers (120) eine Zielumdrehungsanzahl erreichen.

7. Verfahren nach Anspruch 1, ferner umfassend:

Erfassen, wenn gemäß der Zustandsänderungsinformation bestimmt wird, dass die Brüheinheit (20) in eine druckerzeugende Phase eintritt, einer Brühdauer, bevor die Brüheinheit (20) in die druckerzeugende Phase eintritt; und
Bestimmen eines Zustands, in dem festes Material in der Brüheinheit (20) gehalten wird, gemäß der Brühdauer.

8. Verfahren nach Anspruch 7, wobei das Bestimmen eines Zustands, in dem festes Material in der Brüheinheit (20) gehalten wird, gemäß der Brühdauer Folgendes umfasst:

Bestimmen, dass ein festes Material in der Brüheinheit (20) gehalten wird unter der Bedingung, dass die Brühdauer kleiner als eine voreingestellte Zeitschwelle ist; und
Bestimmen, dass die Brüheinheit (20) sich in einem leeren Zustand befindet unter der Bedingung, dass die Brühdauer nicht kleiner als die voreingestellte Zeitschwelle ist.

9. Verfahren nach Anspruch 7, wobei das Bestimmen eines Zustands, in dem festes Material in der Brüheinheit (20) gehalten wird, gemäß der Brühdauer Folgendes umfasst:

Vergleichen der Brühdauer mit einer Mehrzahl von im Voraus aufgestellten Brühzeitintervallen und Bestimmen eines Brühzeitintervalls, in dem die Brühzeit lokalisiert ist, wobei jedes Brühzeitintervall einem Parameter für einen Rest von festem Material entspricht; und
Bestimmen eines Restes von festem Material in der Brüheinheit (20) gemäß dem Brühzeitintervall, in dem die Brühdauer lokalisiert ist.

10. Vorrichtung zum Steuern eines Getränkebrühprozesses, angewandt auf eine Getränkemaschine, wobei eine Brüheinheit (20) der Getränkemaschine ein druckerzeugendes Element (220) zum Erzeugen von Druck in der Brüheinheit (20) im Getränkebrühprozess umfasst, eine Rohrleitung zum Zuführen von Wasser zur Brüheinheit (20) mit einem Durchflussmesser (120) ausgerüstet ist, und die Vorrichtung zum Steuern eines Getränkebrühprozesses Folgendes umfasst:

eine informationserfassende Einheit (401), konfiguriert zum Zuführen (S101) von Wasser zur Brüheinheit (20) in Antwort auf ein Startsignal des aktuellen Getränkebrühablaufs und Erfassen von Zustandsänderungsinformation des Durchflussmessers (120), wobei die Zustandsänderungsinformation konfiguriert ist, einen Änderungstrend der Rotationsgeschwindigkeit des Durchflussmessers (120) in einem aktuellen Getränkebrühprozess anzugeben;

eine Abmessungsauslöseeinheit (402), konfiguriert zum Auslösen (S102) eines Starts des Abmessens einer Getränkeausgabemenge aus dem aktuellen Getränkebrühablauf, wenn gemäß der Zustandsänderungsinformation bestimmt wird, dass die Brüheinheit (20) in eine druckbewahrende Phase eintritt;

eine Stoppsteuerungseinheit (403), konfiguriert zum Stoppen (S103) des Zuführens von Wasser zur Brüheinheit (20), wenn die abgemessene Getränkeausgabemenge eine Zielgetränkemenge erreicht.

11. Getränkemaschine, umfassend:

eine Brüheinheit (20), konfiguriert zum Brühen eines Getränks mit einem festen Material, wobei ein druckerzeugendes Element (220) an einem Auslass der Brüheinheit (20) zum Erzeugen von Druck in der Brüheinheit (20) in einem Getränkebrühprozess angeordnet ist;

eine Wasserzufuhreinheit (10), wobei eine Wasserzufuhrrohrleitung der Wasserzufuhreinheit (10) mit einem Durchflussmesser (120) ausgerüstet ist und die Wasserzufuhreinheit (10) zum Zuführen von Wasser zur Brüheinheit (20) im Getränkebrühprozess der Brüheinheit (20) konfiguriert ist; und

eine Steuerung (30), umfassend einen oder mehrere Prozessoren (302) und einen oder mehrere Arbeitsspeicher (304), wobei der eine oder die mehreren Arbeitsspeicher (304) mindestens einen Programmcode speichern und der mindestens eine Programmcode durch den einen oder die mehreren Prozessoren (302) geladen und ausgeführt wird, um das Verfahren nach einem der Ansprüche 1 bis 9 zu implementieren.

12. Getränkemaschine nach Anspruch 11, wobei die Getränkemaschine eine Kaffeemaschine ist.


**Revendications**

1. Procédé de commande d'un processus d'infusion de boisson, appliqué à une machine à boissons, dans lequel une unité d'infusion (20) de la machine à boissons comprend un élément de pressurisation (220) pour générer une pression dans l'unité d'infusion (20) dans le processus d'infusion de boisson, un tuyau alimentant l'unité d'infusion (20) en eau est pourvu d'un débitmètre (120), et le procédé comprend :

l'alimentation en eau (S101) de l'unité d'infusion (20) en réponse à un signal de démarrage d'infusion de boisson en cours, et l'obtention d'informations de changement d'état du débitmètre (120), dans lequel les informations de changement d'état sont configurées pour indiquer une tendance de changement de vitesse de rotation du débitmètre (120) dans un processus d'infusion de boisson en cours ;

le déclenchement (S102) d'un début de dosage d'une quantité de distribution de boisson de l'infusion de boisson en cours lorsqu'il est déterminé que l'unité d'infusion (20) entre dans une phase de maintien de pression en fonction des informations de changement d'état ; et

l'arrêt (S103) de l'alimentation en eau de l'unité d'infusion (20) lorsque la quantité de distribution de boisson dosée atteint une quantité de boisson cible.

2. Procédé selon la revendication 1, comprenant en outre :
la détermination que l'unité d'infusion (20) entre dans la phase de maintien de pression lorsque les informations de changement d'état indiquent qu'une vitesse de rotation du débitmètre (120) est à un point d'inflexion auquel la vitesse de rotation passe d'une diminution à une augmentation.

3. Procédé selon la revendication 2, dans lequel l'obtention d'informations de changement d'état du débitmètre (120) comprend :

l'obtention d'un paramètre indicateur de vitesse de rotation du débitmètre (120) conformément à une période prédéfinie en réponse au signal de démarrage d'infusion de boisson en cours ; et

la comparaison d'un paramètre indicateur de vitesse de rotation actuel à un dernier paramètre indicateur de vitesse de rotation chaque fois qu'un paramètre indicateur de vitesse de rotation du débitmètre (120) est obtenu, et la détermination des informations de changement d'état du débitmètre (120) dans le processus d'infusion de boisson en cours.

4. Procédé selon la revendication 3, dans lequel le paramètre indicateur de vitesse de rotation est un paramètre de temps d'une révolution du débitmètre (120), et le procédé comprend en outre :

la détermination que la vitesse de rotation du débitmètre (120) est au point d'inflexion auquel la vitesse de rotation passe d'une diminution à une augmentation lorsque les informations de changement d'état établissent qu'un paramètre de temps actuel d'une révolution du débitmètre (120) n'est pas supérieur à une différence entre un dernier paramètre de temps d'une révolution du débitmètre (120) et une constante de correction prédéfinie, et le dernier paramètre de temps d'une révolution du débitmètre (120) n'est pas inférieur à une somme de la constante de correction prédéfinie et d'un avant-dernier paramètre de temps d'une révolution du débitmètre (120).

5. Procédé selon la revendication 3, dans lequel l'obtention d'un paramètre indicateur de vitesse de rotation du débitmètre (120) conformément à une période prédéfinie comprend :

l'échantillonnage de la vitesse de rotation ou d'une valeur de temps d'une révolution du débitmètre (120) à un intervalle d'échantillonnage prédéfini dans chaque période, et l'obtention correspondante de n valeurs de temps ou de n valeurs de vitesse de rotation dans une période en cours ; et

le calcul d'une valeur moyenne des n valeurs de temps ou des n valeurs de vitesse de rotation dans la période en cours, et l'obtention d'un paramètre indicateur de vitesse de rotation du débitmètre (120) dans la période en cours.

6. Procédé selon la revendication 1, dans lequel le déclenchement du démarrage d'un dosage d'une quantité de distribution de boisson de l'infusion de boisson en cours comprend :

le déclenchement d'un démarrage d'un comptage des révolutions du débitmètre (120) ; et

la détermination que la quantité de distribution de boisson dosée atteint la quantité de boisson cible lorsque les révolutions du débitmètre (120) atteignent un nombre de révolutions cible.

7. Procédé selon la revendication 1, comprenant en outre :

l'obtention, lorsqu'il est déterminé que l'unité d'infusion (20) entre dans une phase de pressurisation conformément aux informations de changement d'état, d'une durée d'infusion avant que l'unité d'infusion (20) n'entre dans la phase de pressurisation ; et

la détermination d'un état de présence d'une substance solide dans l'unité d'infusion (20) en fonction de la durée d'infusion.

8. Procédé selon la revendication 7, dans lequel la détermination d'un état de présence d'une substance solide dans l'unité d'infusion (20) en fonction de la durée d'infusion comprend :

la détermination qu'une substance solide est présente dans l'unité d'infusion (20) lorsque la durée d'infusion est inférieure à un seuil de temps prédéfini ; et

la détermination que l'unité d'infusion (20) est dans un état vide lorsque la durée d'infusion n'est pas inférieure au seuil de temps prédéfini.

9. Procédé selon la revendication 7, dans lequel la détermination d'un état de présence d'une substance solide dans l'unité d'infusion (20) en fonction de la durée d'infusion comprend :

la comparaison de la durée d'infusion à une pluralité d'intervalles de temps d'infusion établis à l'avance, et la détermination d'un intervalle de temps d'infusion dans lequel se situe la durée d'infusion, dans lequel chaque intervalle de temps d'infusion correspond à un paramètre de reste de substance solide ; et

la détermination d'un reste de substance solide dans l'unité d'infusion (20) en fonction de l'intervalle de temps d'infusion dans lequel se situe la durée d'infusion.

**10.** Dispositif de commande d'un processus d'infusion de boisson, appliqué à une machine à boissons, dans lequel une unité d'infusion (20) de la machine à boissons comprend un élément de pressurisation (220) pour générer une pression dans l'unité d'infusion (20) dans le processus d'infusion de boisson, un tuyau alimentant l'unité d'infusion (20) en eau est pourvu d'un débitmètre (120), et le dispositif de commande d'un processus d'infusion de boisson comprend :

une unité d'obtention d'informations (401) configurée pour alimenter (S101) l'unité d'infusion (20) en eau en réponse à un signal de démarrage d'une infusion de boisson en cours, et obtenir des informations de changement d'état du débitmètre (120), dans lequel les informations de changement d'état sont configurées pour indiquer une tendance de changement de vitesse de rotation du débitmètre (120) dans un processus d'infusion de boisson en cours ;
une unité de déclenchement de dosage (402) configurée pour déclencher (S102) le démarrage d'un dosage d'une quantité de distribution de boisson de l'infusion de boisson en cours lorsqu'il est déterminé que l'unité d'infusion (20) entre dans une phase de maintien de pression en fonction des informations de changement d'état ; et
une unité de commande d'arrêt (403) configurée pour arrêter (S103) l'alimentation en eau de l'unité d'infusion (20) lorsque la quantité de distribution de boisson dosée atteint une quantité de boisson cible.

**11.** Machine à boissons, comprenant :

une unité d'infusion (20) configurée pour infuser une boisson avec une substance solide, dans laquelle un élément de pressurisation (220) est disposé à une sortie de l'unité d'infusion (20) pour générer une pression dans l'unité d'infusion (20) dans un processus d'infusion de boisson ;
une unité d'alimentation en eau (10), dans laquelle un tuyau d'alimentation d'eau de l'unité d'alimentation en eau (10) est pourvu d'un débitmètre (120), et l'unité d'alimentation en eau (10) est configurée pour alimenter l'unité d'infusion (20) en eau dans le processus d'infusion de boisson de l'unité d'infusion (20) ; et
un contrôleur (30) comprenant un ou plusieurs processeurs (302) et une ou plusieurs mémoires (304), dans laquelle les une ou plusieurs mémoires (304) stockent au moins un code de programme, et l'au moins un code de programme est chargé et exécuté par les un ou plusieurs processeurs (302), pour mettre en œuvre le procédé selon l'une quelconque des revendications 1 à 9.

**12.** Machine à boissons selon la revendication 11, la machine à boissons étant une machine à café.

| Water supply unit 10 | | | Brewing unit 20 | | |
| --- | --- | --- | --- | --- | --- |
| Water source 110 | Flowmeter 120 | Water pump 130 | Brewing chamber 210 | Pressurizing member 220 | Beverage outlet |

Controller 30

Fig. 1

Supply water to a brewing unit 20 in response to a start signal of current beverage brewing, and obtain state change information of a flowmeter 120, where the state change information is configured to indicate a rotational speed change trend of the flowmeter 120 in a current beverage brewing process — S101

Trigger a start of metering a beverage output quantity of the current beverage brewing when it is determined that the brewing unit 20 enters a pressure maintenance stage according to the state change information — S102

Stop supplying water to the brewing unit 20 when the beverage output quantity metered reaches a target beverage quantity — S103

Fig. 2

Fig. 3

Information obtaining unit 401

Metering triggering unit 402

Stop control unit 403

Fig. 4

302

304

Processor

Memory

300

305

Bus interface

301

Receiver

303

Transmitter

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021059466 A1